(19)

Europäisches
Patentamt
European
Patent Office
Office européen
des brevets

(11) **EP 2 249 129 A1**

(12) **EUROPEAN PATENT APPLICATION**
published in accordance with Art. 153(4) EPC

(43) Date of publication:
**10.11.2010 Bulletin 2010/45**

(21) Application number: **08872811.8**

(22) Date of filing: **03.12.2008**

(51) Int Cl.:
***G01F 1/712*** *(2006.01)*

(86) International application number:
**PCT/JP2008/071939**

(87) International publication number:
**WO 2009/107302 (03.09.2009 Gazette 2009/36)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **29.02.2008 JP 2008050034**

(71) Applicant: **Mitsubishi Heavy Industries, Ltd.
Tokyo 108-8215 (JP)**

(72) Inventors:
 • **MUTA, Kenji**
 **Yokohama-shi**
 **Kanagawa 236-8515 (JP)**
 • **TANOURA, Masazumi**
 **Yokohama-shi**
 **Kanagawa 236-8515 (JP)**

 • **TAKITA, Atsushi**
 **Yokohama-shi**
 **Kanagawa 236-8515 (JP)**
 • **UENO, Daishi**
 **Tokyo 108-8215 (JP)**
 • **AOKI, Tadashi**
 **Tokyo 108-8215 (JP)**
 • **SEKIYA, Mitsunobu**
 **Yokohama-shi**
 **Kanagawa 226-8507 (JP)**
 • **TSUKAKOSHI, Hikaru**
 **Yokohama-shi**
 **Kanagawa 226-8507 (JP)**
 • **MINE, Kiyoshi**
 **Yokohama-shi**
 **Kanagawa 226-8507 (JP)**

(74) Representative: **Maiwald Patentanwalts GmbH
Elisenhof
Elisenstrasse 3
80335 München (DE)**

(54) **FLUID MEASUREMENT DEVICE AND FLUID MEASUREMENT METHOD**

(57) Provided is a fluid measurement device and the like for measuring flow velocity of a fluid in detail. A fluid measurement device (10) is configured to included a generator-side detecting section (30) that detects a parameter indicating an operating state of a fluid generator (20) and changing in a corresponding way relative to a generating state of the fluid, a pipe-side detecting section (40) that is provided in a pipe (22) in which a fluid containing the fluid generated by the fluid generator passes through and detects a parameter relating to the fluid passing through the pipe and changing in a corresponding way relative to the operating state of the fluid generator, and a calculating section (50) that calculates the flow velocity of the fluid based on a time shift between the change in the parameter detected by the generator-side detecting section and the change in the parameter detected by the pipe-side detecting section, and a distance (L) along the pipe between a detection position of the parameter relating to the fluid generator and the pipe-side detecting section.

FIG. 1

**Description**

TECHNICAL FIELD

The present invention relates to a fluid measurement device and a fluid measurement method for measuring a flow velocity or the like of a fluid such as exhaust gas.

BACKGROUND ART

In order to lower fuel consumption and lower emissions of an engine, it is necessary to analyze one combustion cycle of the engine in detail. As a result, it is effective to measure in detail changes such as in the temperature and concentrations of the exhaust gas (combustion gas) emitted from the engine. Conventionally, a measuring device has been known that can detect in detail the temperature and concentrations of combustion gas using laser light (e.g., refer to Patent Document 1).

Patent Document: Japanese Patent No. 3943853

DISCLOSURE OF THE INVENTION

Problems to be Solved by the Invention

Herein, if a gas concentration and flow velocity of exhaust gas are known, the mass per time of each gas contained in the exhaust gas, gross emissions per mode traveling, or the like can be obtained. As a result, in order to lower fuel consumption and lower emissions of an engine, in addition to changes in the temperature and concentrations of exhaust gas, it is important to measure in detail the flow velocity of the exhaust gas. However, a method capable of measuring the flow velocity and flow rate of exhaust gas of high temperature in detail has not been proposed.
A problem of the present invention is to provide a fluid measurement device and a fluid measurement method capable of measuring the flow velocity of a fluid in detail.

Means for Solving the Problems

The present invention solves the problem by way of the following solution. It should be noted that, although references symbols corresponding to embodiments of the present invention are assigned and explained in order to facilitate understanding, it is not limited thereto.
According to a first aspect of the ivnention, a fluid measurement device (10), includes: a generator-side detecting section (30) that detects a parameter indicating an operating state of a fluid generator (20) and changing in a corresponding way relative to a generation state of a fluid; a pipe-side detecting section (40) that is provided in a pipe (22) in which a fluid containing the fluid generated by the fluid generator passes through, and detects a parameter relating to the fluid passing through the pipe and changing in a corresponding way relative to the operating state of the fluid generator; and a calculating section (50) that calculates a flow velocity of the fluid based on a time shift between a change in the parameter detected by the generator-side detecting section and a change in the parameter detected by the pipe-side detecting section, and a distance (L) along the pipe between a detection position of the parameter relating to the fluid generator and the pipe-side detecting section.
According to a second aspect of the invention, in the fluid measurement device (10) as described in the first aspect, the calculating section (50) calculates a flow rate of the fluid based on the flow velocity of the fluid and a cross-sectional area of the pipe.
According to a third aspect, in the fluid measurement device (10) as described in the first or second aspect, at least one of a temperature of the fluid, a concentration of a substance contained in the fluid, and an intensity of light absorbed, scattered, and irradiated by the substance is included in a parameter relating to the fluid.
According to a fourth aspect, in the fluid measurement device (10) as described in any one of the first to third aspects, the fluid generator is an internal combustion engine (20) that generates exhaust gas as a fluid, and wherein at least one of an open-close degree of an intake valve included in the internal combustion engine, an open-close degree of an exhaust valve, a pressure inside a combustion chamber included in the internal combustion engine, and a crank angle of a crank shaft included in the internal combustion engine is included in the parameter relating to the fluid.
According to a fifth aspect, in the fluid measurement device (10) as described in any one of the first to fourth aspects, the pipe-side detecting section (40) includes an irradiation portion (41) that irradiates laser light into the fluid and a light-receiving portion (42) that receives the laser light having transmitted or scattered through the fluid, and detects a parameter relating to the fluid based on an intensity ratio of irradiated light irradiated by the irradiation portion and transmitted light received by the light-receiving portion.

According to a sixth aspect, in the fluid measurement device (110) as described in any one of the first to fifth aspects, a plurality of the pipe-side detecting sections (40, 140) is provided along the pipe, and the calculating section (50) selectively uses any output from among the plurality of the pipe-side detecting sections according to the flow velocity of the fluid.

According to a seventh aspect of the invention, in the fluid measurement device (10) as described in any one of the first to sixth aspects, the calculating section (50) evaluates a time shift (AT) between a change in a parameter detected by the generator-side detecting section (30) and a change in a parameter detected by the pipe-side detecting section (40) by comparing a waveform signal based on the change in the parameter detected by the pipe-side detecting section with a waveform signal based on the change in the parameter detected by the generator-side detecting section.

According to an eighth aspect of the invention, in the fluid measurement device (10) as described in any one of the first to seventh aspects, the calculating section (50) evaluates the time shift between the change in the parameter detected by the generator-side detecting section (30) and the change in the parameter detected by the pipe-side detecting section (40) by calculating a cross-correlation of the change in the parameter detected by the generator-side detecting section and the change in the parameter detected by the pipe-side detecting section.

According to a ninth aspect of the invention, in the fluid measurement device (10) as described in any one of the first to eighth aspects, the fluid generator is an internal combustion engine (20) that generates exhaust gas as a fluid, and the calculating section (50) estimates a revolution speed of the internal combustion engine based on a result of signal analysis on a change in a parameter relating to the exhaust gas obtained from an output signal of the pipe-side detecting section (40).

According to a tenth aspect of the invention, in the fluid measurement device (210) as described in any one of the first to ninth aspects, the fluid generator is a fluid supply device (70) that supplies, to upstream of the pipe-side detecting section (40) into a first fluid passing through the pipe (22), a second fluid to cause a concentration of a substance contained in the first fluid to fluctuate, and the pipe-side detecting section (40) detects a change in a parameter relating to the first fluid or the second fluid.

According to an eleventh aspects of the invention, a generator-side detection step of detecting a parameter indicating an operating state of a fluid generator (20) and changing in a corresponding way relative to a generator state of a fluid; a pipe-side detection step of detecting, in a pipe (22) in which a fluid containing the fluid generated by the fluid generator passes through, a parameter relating to the fluid passing through the pipe and changing in a corresponding way relative to the operating state of the fluid generator; and a calculating step of calculating a flow velocity of the fluid based on a time shift between a change in the parameter detected in the generator-side detection step and a change in the parameter detected in the pipe-side detection step, and a distance along the pipe between a detection position of the parameter relating to the fluid generator and the pipe-side detecting section.

It should be noted that the configuration explained by assigning reference symbols may be refined as appropriate, and at least a portion may be substituted with another constituent.

Effects of the Invention

According to the present invention, the following effects can be obtained.

(1) Since the fluid measurement device and fluid measurement method according to the present invention detect a change in parameter related to a fluid generator and a change in parameter related to a fluid, and obtains a flow velocity based on the time shift (time lag) of these parameters, the flow velocity of the fluid can be measured in detail.
(2) It is convenient since the flow rate of fluid can be obtained together with the flow velocity of the fluid.
(3) The pipe-side detecting section is a sensor of highly-responsive type that measures parameters related to the fluid based on the intensity ratio or the like of irradiated light and transmitted light of the laser light; therefore, a change in a parameter related to the fluid can be measured in detail, whereby the flow velocity of the fluid can be measured in detail. In addition, a change in a parameter can be reliably detected even if the fluid is at high temperature.
(4) A plurality of pipe-side detecting sections is provided, and the variation in distance between the generator-side detecting section and the pipe-side detecting section is increased; therefore, the flow velocity of the fluid can be detected in detail irrespective of the flow velocity of the fluid.
(5) Since the revolution speed of the internal combustion engine is estimated by signal analysis of a change in a parameter related to the exhaust gas, it can function also as a tachometer, and thus is convenient.
(6) Since a second fluid is supplied to the first fluid, even in a case of the change in a parameter of the first fluid itself being small and there being no change in the parameter, the flow velocity of the fluid can be reliably measured.

BRIEF DESCRIPTION OF THE DRAWINGS

FIG. 1 is a view showing a velocity meter and an engine according to a first embodiment;
FIG. 2 is a view showing a structure of a measurement cell provided to the velocity meter shown in FIG. 1;
FIG. 3(FIG. 3A and FIG. 3B) is graphs showing output from the measurement cell when the engine revolution speed is 2400 min$^{-1}$;
FIG. 4(FIG. 4A and FIG. 4B) is graphs showing output from the measurement cell when the engine revolution speed is 3600 min$^{-1}$;
FIG. 5(FIG. 5A and FIG. 5B) is graphs showing an exhaust valve aperture signal and a signal indicating a change in exhaust gas temperature by comparison;
FIG. 6(FIG. 6A and FIG. 6B) is charts showing power spectra of gas temperature and $H_2O$ concentration and a power spectrum of revolution speed (2400 min$^{-1}$) of an engine by comparison;
FIG. 7(FIG. 7A and FIG. 7B) is charts showing power spectra of $CO_2$ concentration and CO concentration and a power spectrum of revolution speed (2400 min$^{-1}$) of an engine by comparison;
FIG. 8 is a chart showing a power spectrum of $CH_4$ concentration and a power spectrum of revolution speed (2400 min$^{-1}$) of an engine by comparison;
FIG. 9(FIG. 9A and FIG. 9B) is charts showing power spectra of gas temperature and $H_2O$ concentration and a power spectrum of revolution speed (3600 min$^{-1}$) of an engine by comparison;
FIG. 10(FIG. 10A and FIG. 10B) is charts showing power spectra of $CO_2$ concentration and CO concentration and a power spectrum of revolution speed (3600 min$^{-1}$) of an engine by comparison;
FIG. 11 is a chart showing a power spectrum of $CH_4$ concentration and a power spectrum of revolution speed (3600 min$^{-1}$) of an engine by comparison;
FIG. 12 is a view showing a velocity meter and an engine according to a second embodiment; and
FIG. 13 is a view showing a velocity meter and a pipe according to a third embodiment.

EXPLANATION OF REFERENCE NUMERALS

10    Velocity meter
20    Engine
30    Valve sensor
40    Measurement cell
50    Calculating section

PREFERRED MODE FOR CARRYING OUT THE INVENTION

The present invention solves the problem of providing a fluid measurement device and a fluid measurement method capable of measuring a flow velocity of a fluid in detail by providing a calculating section that calculates a flow velocity of the exhaust gas based on a time shift between a change in the exhaust valve aperture signal of the engine and an output signal of a measurement cell that measure the temperature and concentrations of the exhaust gas, and on a distance from the exhaust valve to the measurement cell.

EMBODIMENTS

First Embodiment

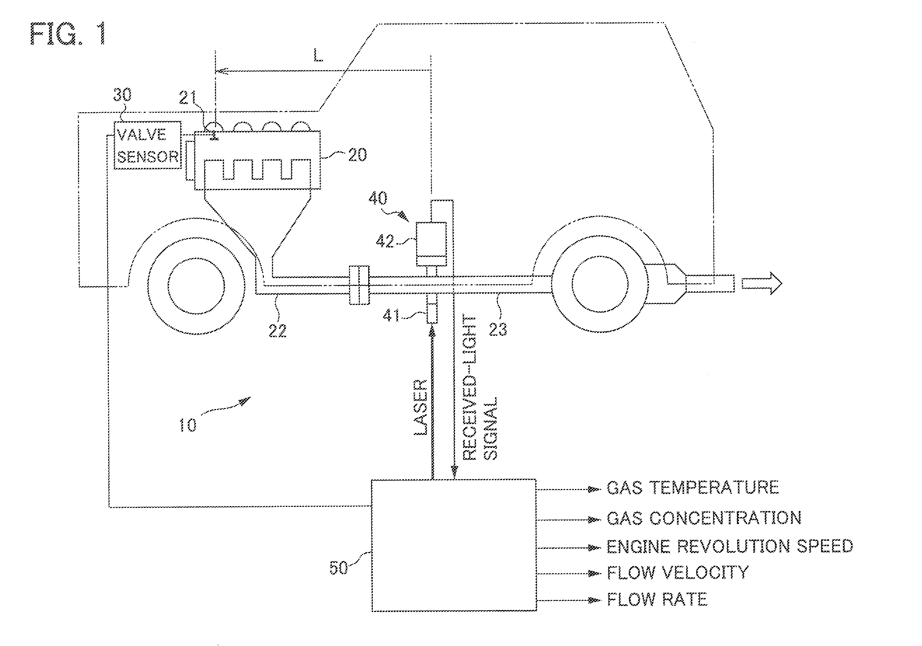

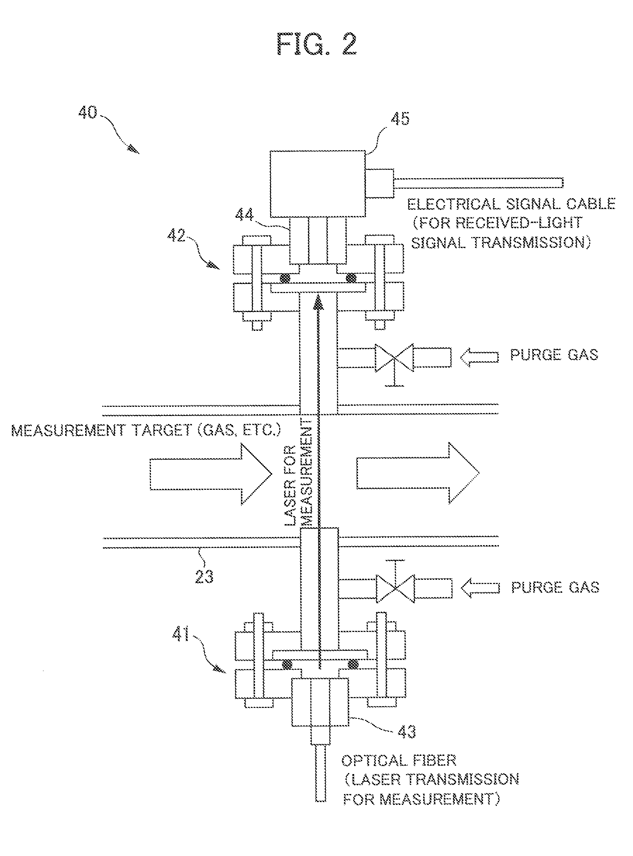

A velocity meter 10 and an exhaust gas flow velocity/flow rate measurement method, which are a first embodiment of a fluid measurement device and a fluid measurement method applying the present invention, are explained with reference to the drawings. The measurement target by the velocity meter 10 of the present embodiment is exhaust gas that is emitted from a four-cycle gasoline engine 20 (hereinafter referred to simply as engine 20), which is an internal combustion engine. FIG. 1 is a view showing the velocity meter 10 and the engine 20 of the embodiment. In addition, FIG. 2 is a view showing a structure of a measurement cell 40 provided to the velocity meter 10 shown in FIG. 1.
The engine 20 obtains motive force by causing a mixed gas of gasoline and air to combust inside cylinders thereof. The combustion gas of the mixed gas is emitted as exhaust gas from the cylinders via exhaust valves 21, and thus the engine 20 functions as a fluid generator. In the exhaust gas emitted from the engine 20, various gases such as

steam ($H_2O$), carbon monoxide gas (CO), carbon dioxide gas ($CO_2$), and methane gas ($CH_4$) are contained. The exhaust gas emitted from the engine 20 is introduced to exhaust plumbing 23 through an exhaust manifold 22, and passes through the exhaust plumbing 23 and is exhausted to the atmosphere.

A valve position sensor 30 (hereinafter referred to as valve sensor 30) that detects the aperture of an exhaust valve is provided to the engine 20. A publicly known resistance-type sensor or the like can be used as the valve sensor 30. The valve sensor 30 detects and outputs the position of an exhaust valve, which changes according to the combustion cycle of the engine 20, in substantially realtime, and functions as an internal combustion engine-side detecting section configuring a portion of the velocity meter 10.

The velocity meter 10 is provided with a calculating section 50 that calculates a flow velocity of exhaust gas based on an output signal from the valve sensor 30 and an output signal of the measurement cell 40 provided in the middle of the exhaust plumbing 23, and on a distance between the exhaust valve 21 and the measurement cell 40. It should be noted that, although the position (aperture) of the exhaust valve 21 is measured directly by way of the valve sensor 30 in the present embodiment, it is not limited thereto, and an aperture signal of the exhaust valve 21 from an ECU for engine control or the like may be detected.

In a case in which laser light of a specific wavelength is irradiated into the exhaust gas, the measurement cell 40, which is a detecting section, applies a characteristic (laser absorption spectroscopy) whereby laser light is absorbed due to vibrational-rotational transition of molecules, and measures gas concentration based on the intensity ratio of incident light to transmitted light. In addition, the measurement cell 40, for example, is made so as to be able to measure the temperature of the gas based on the concentration of $H_2O$. Moreover, since the absorption coefficient of laser light depends on the temperature of the exhaust gas and the pressure of the exhaust gas, it is necessary to measure the pressure of the exhaust gas; however, the pressure of the exhaust gas is measured by a pressure sensor, which is not illustrated, provided inside the channel. The reference symbol L assigned to the distance along the exhaust plumbing 23 (including the exhaust manifold 22) between the exhaust valve 21 and the measurement cell 40 in FIG. 1 will be explained below.

As shown in FIG. 2, the measurement cell 40 is provided with an irradiation portion 41 that irradiates laser light and a light-receiving portion 42 that receives laser light (transmitted light) irradiated from the irradiation portion 41 and transmitted through the exhaust gas.

A tip of the irradiation portion 41 and the light-receiving portion 42 are each formed in a tube shape, and are inserted through a hole provided in the exhaust plumbing 23 into the exhaust plumbing 23. Purge gas is supplied in a portion formed in this tube shape, whereby fouling of an irradiation window and a light-receiving window due to exhaust gas flowing thereinto is prevented. In the measurement cell 40, the irradiation portion 41 irradiates a plurality of laser beams having different oscillation timing through a light-transmission optical system 43. This laser light transmits through the exhaust gas, and the light receiving portion 42 detects this transmitted light via a light-receiving optical system 44. The light-receiving portion 42 is provided with a signal processing circuit 45 that converts the laser light thus received to an electrical signal (analog signal), and this electrical signal is input to the calculating section 50. The calculating section 50 generates waveform data (described later) by performing A/D conversion on this electrical signal.

The exhaust gas emitted from the engine 20 has a temperature, gas concentrations, and the like that pulsate in substantially consistent cycles corresponding to the combustion cycles of the engine 20. The measurement cell 40 of the present embodiment has a responsiveness of no more than 1 ms, and is made so as to be able to measure changes in gas concentration and temperature of the exhaust gas that is pulsating in detail, for example.

It should be noted that, although an example is illustrated in FIG. 1 of measuring the flow velocity of exhaust gas emitted from the engine 20 equipped to a full-size car, measurement of the flow velocity of exhaust gas is not limited thereto, and may be performed on a stand-alone engine 20 (engine bench testing).

A flow velocity measurement method with the velocity meter 10 of the present embodiment will be specifically explained by referring to test data. The test was performed using a one-cylinder four-cycle engine under the two conditions of 2400 min$^{-1}$ (2400 rpm) and 3600 min$^{-1}$ (3600 rpm).

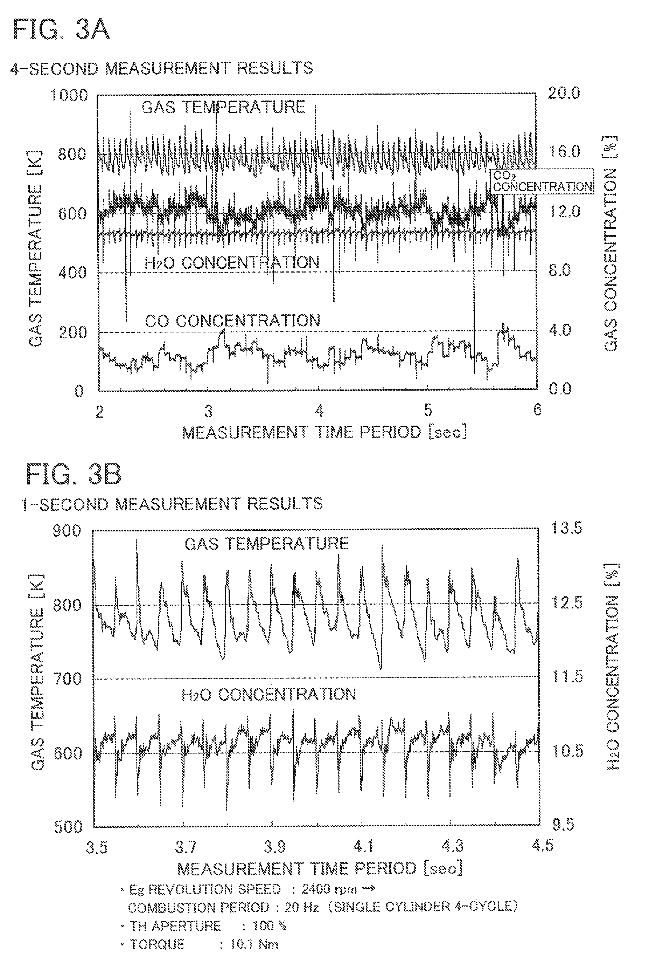

FIG. 3(FIG. 3A and FIG. 3B) is waveform data generated based on the output of the measurement cell when the revolution speed is 2400 min$^{-1}$, with FIG. 3A and FIG. 3B showing 4-second measurement results and 1-second measurement results, respectively.

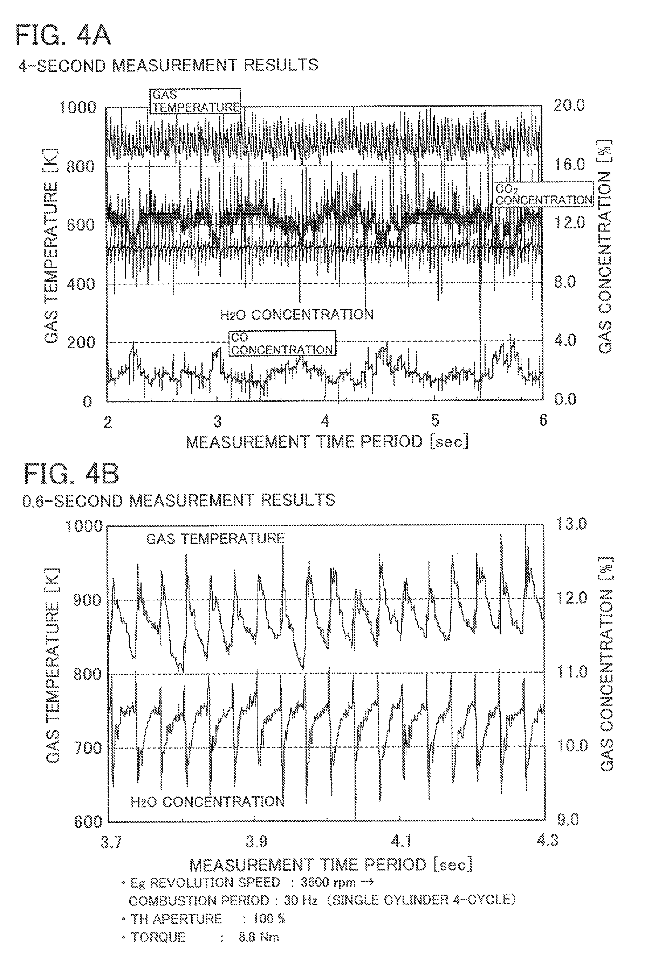

FIG. 4(FIG. 4A and FIG. 4B) is waveform data generated based on the output of the measurement cell when the revolution speed is 3600 min$^{-1}$, with FIG. 4A and FIG. 4B showing 4-second measurement results and 0.6-second measurement results, respectively.

As shown in FIGS. 3(FIG. 3A and FIG. 3B) and 4(FIG. 4A and FIG. 4B), the gas temperature, $CO_2$ concentration, $H_2O$ concentration, and CO concentration of the exhaust gas each pulsate at a substantially constant period. It should be noted that, although omitted in these figures, the $CH_4$ concentration also pulsates similarly. For example, when the revolution speed of the engine 20 is 2400 min$^{-1}$, the gas temperature and the $H_2O$ concentration each pulsate twenty times in one second (refer to FIG. 3B), and the pulsation cycle thereof is 0.05 seconds (50 ms). In contrast, the measurement cell 40 of the present embodiment has a response speed of no more than 1 ms, and thus data sampling of at least approximately fifty times is possible when the gas temperature and $H_2O$ concentration changes in one cycle. Therefore, the change in a parameter such as a gas concentration can be captured in detail. It should be noted that, when the revolution speed of the engine is 3600 $min^{-1}$, although the pulsation cycle becomes 33.3 ms, even in this case, the change in a parameter such as a gas concentration can be sufficiently captured in detail.

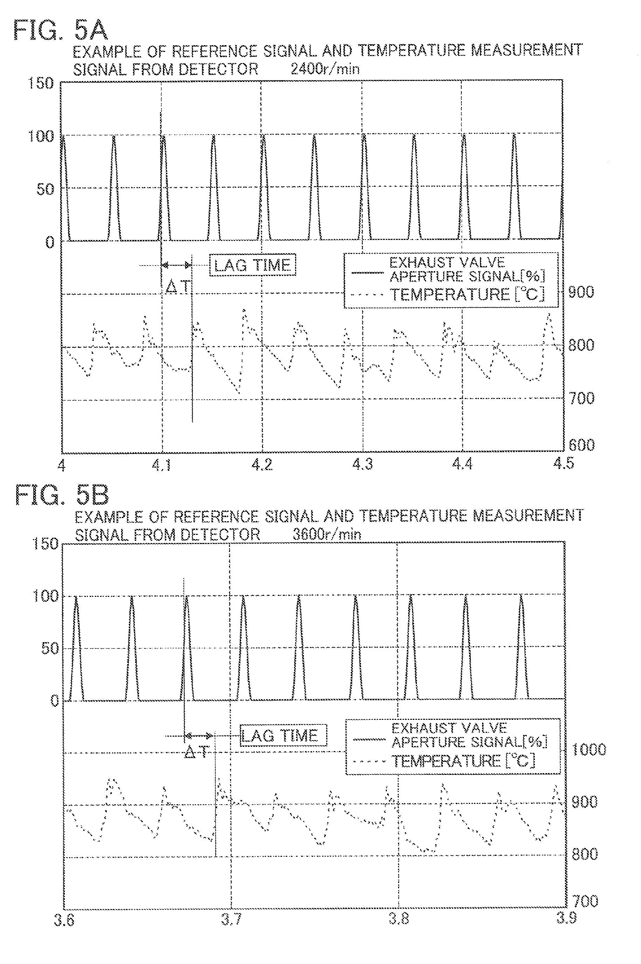

FIG. 5(FIG. 5A and FIG. 5B) is graphs showing an aperture signal of the exhaust valve 21 output from the valve sensor 30 and a signal indicating a change in exhaust temperature measured by the measurement cell 40 by comparison, with FIG. 5A showing when the revolution speed of the engine is 2400 $min^{-1}$, and FIG. 5B showing when the revolution speed of the engine is 3600 $min^{-1}$.

The calculating section 50 obtains the time shift (phase difference) of these waveforms by comparing the waveform data generated based on the output of the measurement cell 40 with the waveform data output from the valve sensor 30. The waveform data output from the valve sensor 30 is substantially square wave regularly repeating 0% and 100%, and corresponds to the combustion cycles of the engine 20. On the other hand, the waveform data of gas elemental substances that can be measured by the measurement cell 40 are also pulsating corresponding to the combustion cycles of the engine 20, as described above. Therefore, data of any gas may be used as data corresponding with the output data of the valve sensor 30 when obtaining the phase difference. In the present embodiment, data of gas temperature is used to calculate the flow velocity of exhaust gas as an example.

As shown in each graph of FIGS. 5A and 5B, the waveform signals indicating the gas temperature and gas concentration are different in waveform themselves from the exhaust valve aperture signal; however, there is a lag (phase difference $\Delta T$) in timing in which the waveform stands out relative to the exhaust valve aperture signal. The calculating section 50 evaluates the phase difference $\Delta T$ from these waveform data, and calculates the velocity of exhaust gas based on this phase difference $\Delta T$ and the distance L between the exhaust valve 21 and the measurement cell 40.

In addition, the velocity meter 10 of the present embodiment is made so as to obtain the volume (flow rate) of exhaust gas flowing per time based on a cross-sectional area of the exhaust plumbing 23 that had been measured beforehand and the exhaust gas flow velocity, and thus has a function as a flow meter. This enables the emitted mass per time such as of $CO_2$ gas, for example, contained in the exhaust gas to be found.

It should be noted that, the method for evaluating the time shift between the output of the valve sensor 30 and the output of the measurement cell 40 is not limited to the method of comparing the waveform data of signals as described above and, for example, a method for analytically calculating a cross-correlation of measurement signals based on formula 1 shown below may be used. If the output signal from the valve sensor 30 is set as $S_A(t_1)$ and the output signal from the measurement cell 40 is set as $S_B(t_2)$, the formula 1 showing the cross-correlation of these can be expressed as follows.

$$S_B(t_2-T) \cdot S_A(t_1) \cdots (\text{formula 1})$$

In addition, the velocity meter of the present embodiment is made so as to be able to estimate the revolution speed of the engine 20 based on the power spectrum of the gas temperature or the gas concentration obtained by Fast Fourier Transformation (FFT) of the output of the measurement cell 40, and thus also has a function as an engine tachometer.

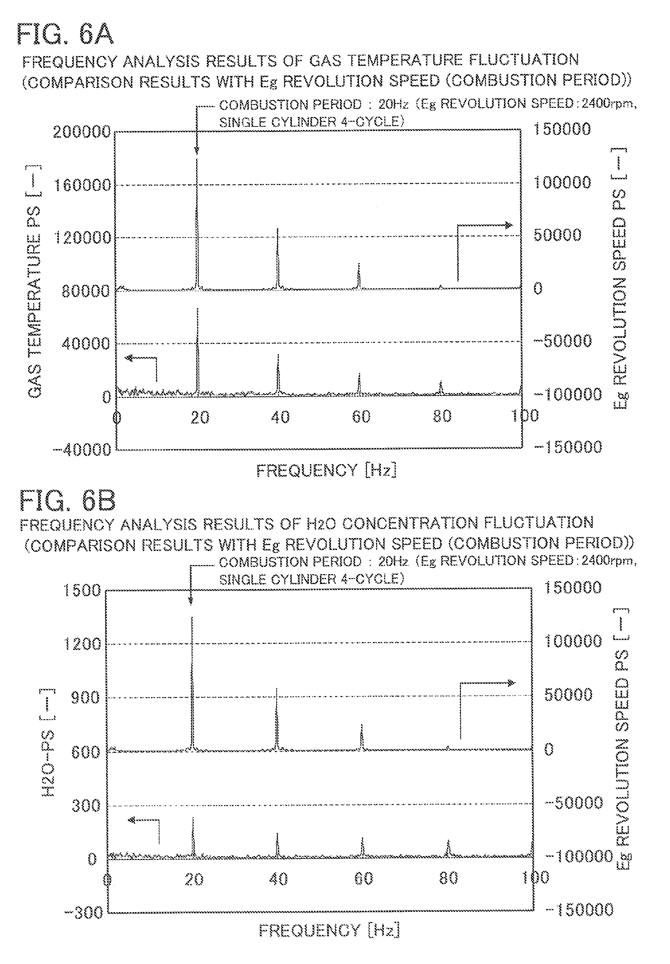

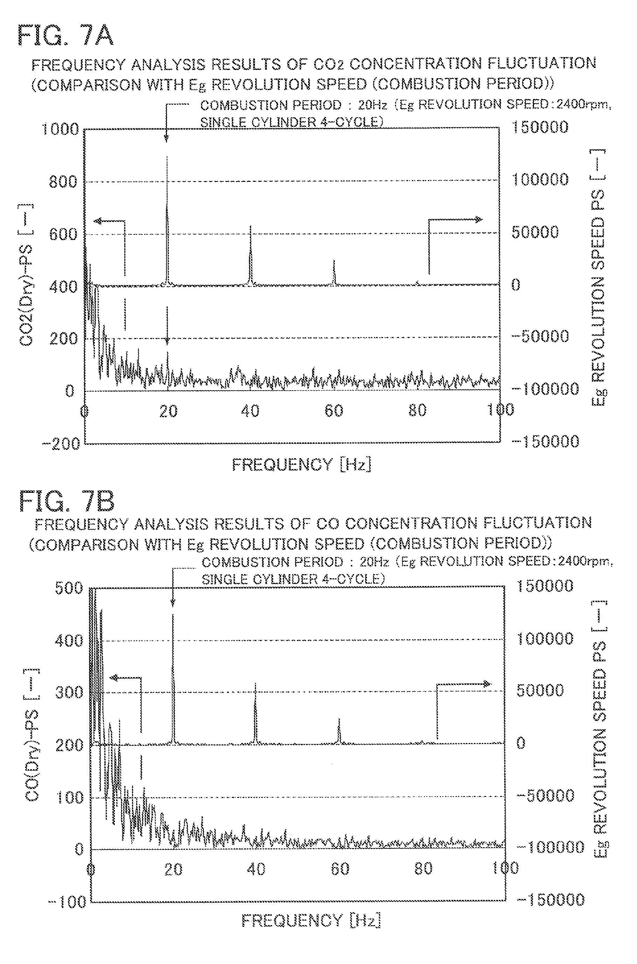

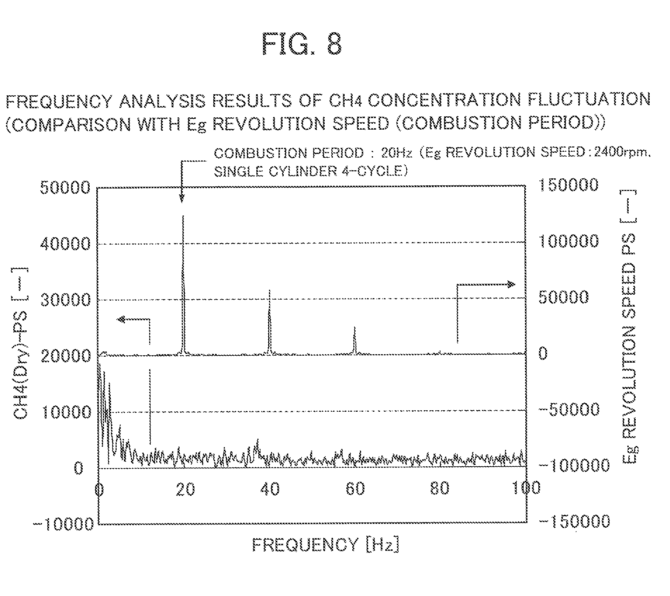

FIGS. 6(FIG. 6A and FIG. 6B) to 8 are charts showing power spectra of the gas temperature or gas concentration and power spectra of the revolution speed (2400 $min^{-1}$) of the engine by comparison. FIGS. 6A and 6B show the power spectra of gas temperature and $H_2O$ concentration and power spectra of the revolution speed of the engine by comparison, respectively. FIGS. 7A and 7B show power spectra of $CO_2$ concentration and CO concentration and power spectra of the revolution speed of the engine by comparison, respectively. FIG. 8 shows a power spectrum of the $CH_4$ concentration and a power spectrum of the revolution speed of the engine by comparison.

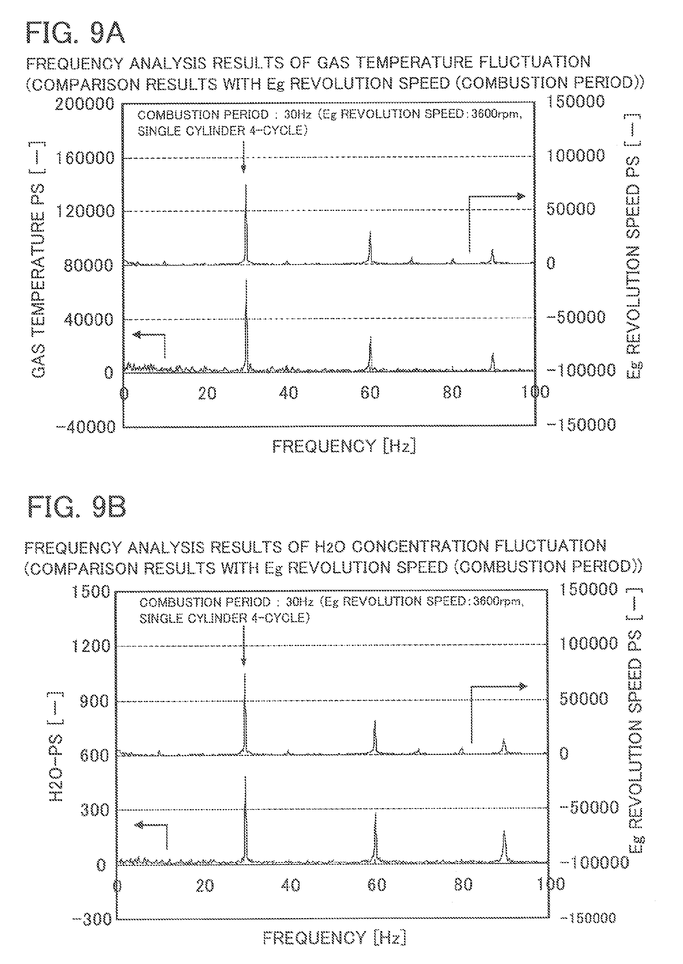

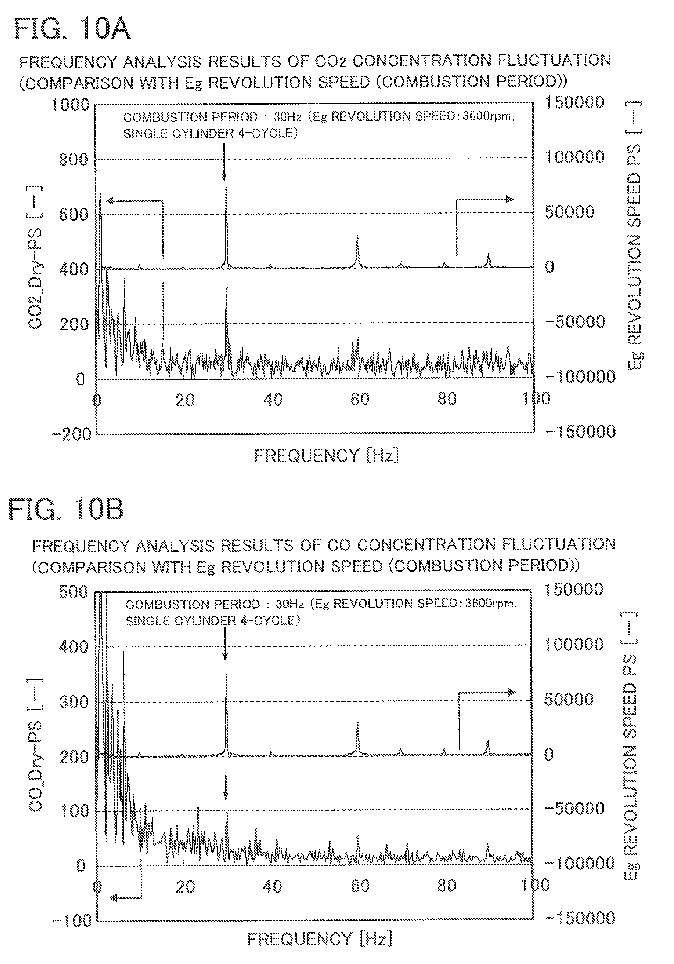

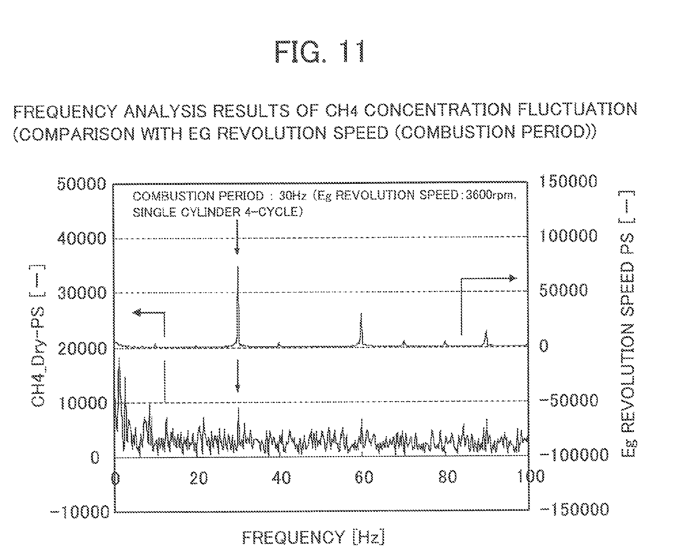

FIGS. 9(FIG. 9A and FIG. 9B) to 11 are charts showing power spectra of the gas temperature or gas concentration and power spectra of the revolution speed (3600 $min^{-1}$) of the engine by comparison. FIGS. 9A and 9B show power spectra of gas temperature and $H_2O$ concentration and power spectra of the revolution speed of the engine by comparison, respectively. FIGS. 10A and 10B show power spectra of $CO_2$ concentration and CO concentration and power spectra of the revolution speed of the engine by comparison, respectively. FIG. 11 shows a power spectrum of $CH_4$ concentration and a power spectrum of the revolution speed of the engine by comparison.

For example, as shown in FIG. 6A, the frequency (approximately 20 Hz) at which a peak of the power spectrum of the gas temperature appears and a frequency (approximately 20 Hz) at which a peak of the power spectrum of the combustion period of the engine 20 appears are corresponding, and thus the revolution speed of the engine can be estimated by the peak of the power spectrum of the gas temperature. For example, if the peak frequency of the gas temperature from the output of the measurement cell 40 is known to be approximately 20 Hz, even if the power spectrum of the engine revolution speed is temporarily unclear, the peak frequency of the engine revolution speed can be estimated to also be approximately 20 Hz. Since the crank shaft of a four-cycle engine revolves twice per one combustion cycle, if the combustion cycle (combustion period) of the engine 20 can be obtained, the revolution speed of the engine 20 can also be obtained. In this case, since the combustion cycle is 20 Hz, the engine revolution speed can be estimated as 2400 revolutions per minute (2400 $min^{-1}$).

In addition, in the above example, although the engine revolution speed was estimated based on the gas temperature, it is not limited thereto, and the combustion cycle of the engine 20 can similarly be estimated from the peak of the power spectrum of the concentration of any gas detectable by the measurement cell 40. As shown in FIGS. 6B and 7A, the peaks of the power spectrum of the $H_2O$ concentration and $CO_2$ concentration obtained based on the output of the measurement cell 40 appear at approximately 20 Hz, similarly to the gas temperature. Therefore, the engine revolution speed (2400 $min^{-1}$) can also be estimated from these gas concentrations.

Even in a case in which the engine revolution speed is 3600 $min^{-1}$, the ability to estimate the engine revolution speed from the power spectra of outputs (gas temperature, gas concentrations) from the measurement cell 40 is evident from FIGS. 9(FIG. 9A and FIG. 9B) to 11. For example, as shown in FIG. 9A, if the peak of the power spectrum of the gas temperature is approximately 30 Hz, even if the power spectrum of the engine revolution speed is temporarily unclear, the peak frequency of the engine revolution speed can also be estimated to be approximately 30 Hz, and the engine revolution speed can be estimated to be 3600 $min^{-1}$.

It should be noted that, in a case of the revolution speed being 2400 $min^{-1}$, since it is difficult to specify the peak frequency of the power spectra of the CO concentration and $CH_4$ concentration, the parameter used in order to estimate the revolution speed of the engine may be classified into appropriate categories according to the anticipated engine revolution speed. For example, a clear peak may appear in the power spectra of the $H_2O$ concentration and $CO_2$ concentration also at 2400 $min^{-1}$, and thus it is possible to estimate the engine revolution speed.

According to the velocity meter 10 and the exhaust gas flow velocity flow rate measurement method of the first embodiment explained above, the following effects can be obtained.

(1) The velocity meter 10 focuses on there being a time shift in the output of the valve sensor 30 and the output of the measurement cell 40, which both change according to the combustion cycle of the engine 20. In addition, the measurement cell 40 uses a high-response element that can detect in detail a change in the gas temperature and gas concentration; therefore, the calculating section 50 can directly obtain a flow velocity of exhaust gas from the time shift of the outputs thereof. Therefore, the flow velocity of exhaust gas can be measured in detail.

(2) For example, in measuring the temperature of the exhaust gas, although it has been considered to provide a thermocouple inside the exhaust plumbing, in this case, there is a possibility of obstructing the flow of exhaust gas, and there is a possibility that accurate measurement of the exhaust gas flow velocity will become difficult. In contrast, the measurement cell 40 of the present embodiment is of a type that irradiates laser light into the exhaust gas; therefore, the flow velocity of the exhaust gas can be accurately measured while not causing drag on the exhaust gas.

(3) The mass of the exhaust gas can be obtained based on the concentration and density of each gas contained in the exhaust gas; therefore, the emission amount per time such as of $CO_2$ contained in the exhaust gas can be obtained on a mass basis from the flow velocity of the exhaust gas.

(4) It is convenient since the revolution speed of the engine 20 can be estimated based on the temperature change and concentration change of the exhaust gas.

Second Embodiment

Next, a velocity meter 110, which is a second embodiment of a fluid measurement device applying the present invention, will be explained. In this second embodiment, the same reference symbols or reference symbols consistent with the last digits thereof are assigned to portions fulfilling functions that are similar to the first embodiment described above, and explanations and drawings that would be redundant are omitted where appropriate.

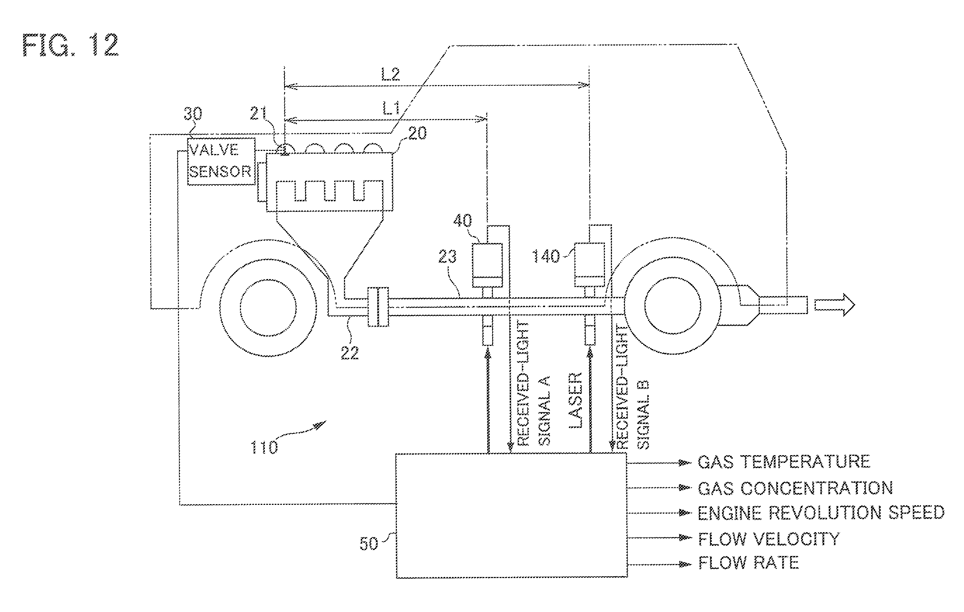

FIG. 12 is a view showing the velocity meter 110 and the engine 20 of the second embodiment.

The velocity meter 10 of the first embodiment includes one measurement cell 40 in the exhaust plumbing 23, whereas the velocity meter 110 of the second embodiment is provided with two measurement cells 40 and 140 in the exhaust plumbing 23. The two measurement cells 40 and 140 are disposed to be spaced apart by a predetermined distance along a direction of flow of the exhaust gas. In addition, the calculating section 50 measured the flow velocity of exhaust gas based on the output of the valve sensor 30 and the output of one of these measurement cells 40 and 140, and on the distance (explained by respectively assigning L1 and L2 in FIG. 12) from the exhaust valve 21 to the selected measurement cell (measurement cell 40 or measurement cell 140).

The reason for providing the two measurement cells 40 and 140 is explained below. As explained in the aforementioned first embodiment, the calculating section 50 obtains the flow velocity of exhaust gas by comparing a waveform indicating an output of the valve sensor 30 and a waveform indicating an output of the measurement cell. Herein, for example, in a case of the exhaust gas flow velocity being low velocity, even though the output of the valve sensor 30 has undergone one cycle, the output waveform of the measurement cell 40 does not stand out, and there is a possibility for the precision of the flow velocity measurement to decrease. Such a flaw can be solved by making the measurement cell 40 to be in close proximity to the engine 20; however, if the engine 20 and the measurement cell 40 are made in very close proximity, there is a possibility that the precision of the flow velocity measurement will similarly decrease. Therefore, it is better that the distance between the engine 20 and the measurement cell 40 be spaced apart to some extent.

In this way, measurement of the flow velocity may become difficult if the distance of the engine 20 and the measurement cell 40 is spaced too far apart or is too close depending on the velocity of the exhaust gas, which is the measurement target. Consequently, the velocity meter 110 of the second embodiment is provided with the two measurement cells 40 and 140 in the exhaust plumbing 23, and is made to have two variations in distance between the engine 20 and the measurement cell 40. The measurer can precisely measure the flow velocity of the exhaust gas by selecting any of the measurement cells 40 and 140 according to the anticipated velocity of the exhaust gas.

According to the velocity meter of the second embodiment explained above, in addition to the effects obtained by the velocity meter of the first embodiment, an effect is obtained in that the flow velocity of the exhaust gas can be measured in detail irrespective of the flow velocity of the exhaust gas.

Third Embodiment

Next, a velocity meter 210, which is a third embodiment of a fluid measurement device applying the present invention, will be explained. In contrast to the velocity meters of the first and second embodiments that measure the flow velocity and flow rate of exhaust gas emitted from an engine, the velocity meter 210 of the third embodiment measures the flow velocity and flow rate of air aspirated into an engine, for example.

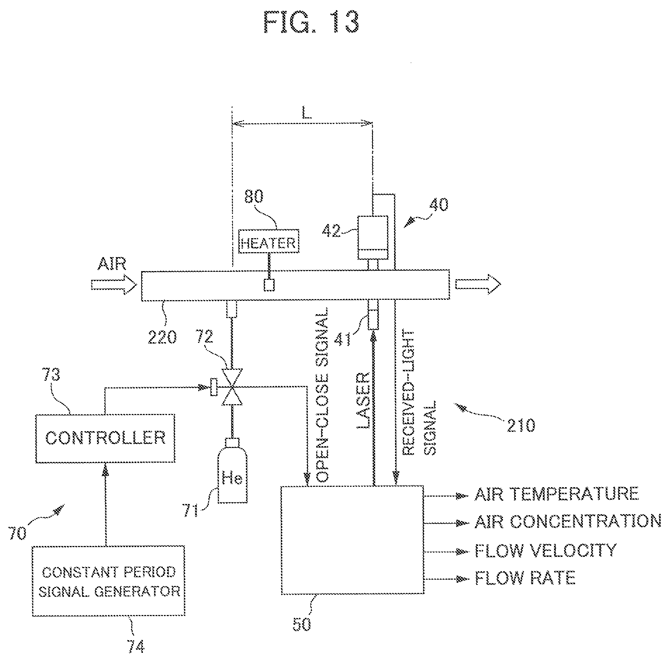

FIG. 13 is a view showing the velocity meter of the third embodiment.

The velocity meter 210 is provided in a pipe 220 (intake manifold) that leads fresh air to the combustion chambers of an engine (not illustrated), and measures the flow velocity and flow rate of air passing into this pipe 220. The velocity meter 210 includes a measurement cell 40, calculating section 50, gas supply device 70, and the like.

The measurement cell 40 and the calculating section 50 are similar to the measurement cell 40 and calculating section 50 of the first embodiment, respectively, and this explanations thereof are omitted. The gas supply device 70 is inside the pipe 220, and supplies helium gas, which is an inert gas, to an upstream side (engine 20 side) of the measurement cell 40 at fixed periods.

The gas supply device 70 includes a compressed gas cylinder 71 that is filled with helium gas, and a solenoid valve 72 is provided in the piping that connects this compressed gas cylinder 71 with the pipe 220. The gas supply device 70 includes a valve timing controller 73 (hereinafter referred to as controller 73) that controls the open-close timing of the solenoid valve 72, and a periodic signal transmitted by the constant period signal generator 74 is input to this controller 73.

The controller 73 controls the solenoid valve 72 according to these signals, and switches supply/no supply of helium gas to the air at a constant frequency. The calculating section 50 detects an open-close signal (substantially a square wave) of the valve output from the solenoid valve 72, and calculates the flow velocity of air based on the time shift between this open-close signal and the received light signal output from the measurement cell 40, and on the distance L between the supply port (solenoid valve 72) of helium gas and the measurement cell 40. It should be noted that, although helium gas is supplied to air at fixed periods in the present embodiment, it is not particularly necessary to supply at fixed periods so long as the gas concentration of helium gas changes with time.

In the velocity meter 210 of the third embodiment, the gas concentrations such as of $H_2O$, CO, and $CO_2$ contained in the air decrease relatively depending on helium gas being supplied to the air flowing inside the pipe 220. Consequently, fluctuation in the concentrations of gases contained in air also becomes periodic in response to supply/no supply of helium gas changing periodically. In this way, the velocity meter 210 of the third embodiment supplies helium gas as a fluctuation marker gas to the air; therefore, even in a case in which the extent of change in a parameter (temperature and gas concentration contained in air) such as of air introduced from outside is temporarily small, or in a case in which there is substantially no change in a parameter, the flow velocity can be measured reliably. In addition, in a case in which the waveform data showing a change in a parameter relating to air, for example, is a waveform prepared so as to be close to a sine wave, although there is a possibility for determining the time shift becoming difficult, since the waveform is upset by supplying helium gas at a constant frequency, the time shift can be determined easily.

It should be noted that, although the flow velocity and flow rate of air supplied to the engine are measured in the present embodiment, the velocity meter 210 is not limited thereto, and even if for a fluid other than that supplied to an engine, so long as being a fluid that flows inside a pipe, can measure the flow velocity or the like, and can be used as a general velocity or flow meter. In addition, although fluctuation in a gas concentration such as for $CO_2$ gas contained in air was detected in the present embodiment by a measurement cell similar to the first embodiment, it is not limited thereto, and the concentration change in helium gas itself may be detected. Even in this case, the flow velocity and the like of air can be measured in detail from the time shift of the open-close signal of the solenoid valve 72 and the output signal of the measurement cell 40.

In addition, as shown in FIG. 13, a heater 80 that causes a change in temperature (heating) of the air may be provided at a position on an further upstream side in the direction in which the air (fluid) is flowing than the measurement cell 40. It should be noted that, although the heating element of the heater 80 is provided to be inserted inside of the pipe 220 in FIG. 13, it is not limited thereto, and the temperature of air may be caused to change by heating an outer peripheral surface portion of the pipe 220. The heater 80 periodically repeats heating of air and exhaust heating, and the calculating section 50 detects this heating cycle from the heater 80 as well as detecting an aspect of the temperature change of the air by the measurement cell 40, and calculates the flow velocity of the air based on the time shift (phase difference) of these outputs and the distance between the heater 80 and the measurement cell 40. In this case, it is possible to obtain the flow velocity or flow rate of air without affecting the composition thereof. It should be noted that, in this case, it is possible to obtain the flow velocity or flow rate of a fluid (air) even without providing the helium gas supply device 70. In addition, although the heater 80 that heats the air was explained for an example in the aforementioned example, a heater exchanger that can heat or cool the temperature of the fluid may be provided.

Alternative Embodiments

The present invention is not limited to the embodiments explained above; various modifications and alterations such as illustrated below are possible, and these are also included within the technical scope of the present invention.

(1) The embodiments used measurement cells applying laser absorption spectroscopy as pipe-side detecting sections; however, the pipe-side detecting sections are not limited thereto, for example, and may employ a well-known thin-film temperature sensor and absorption spectroscopy - scattering spectroscopy - emission spectroscopy using light other than laser, and the flow velocity of exhaust gas may be measured based on the output (temperature change of exhaust gas) of this thin-film temperature sensor. In addition, although the embodiments used a valve sensor that detects the aperture of the exhaust valve as an internal combustion engine-side detecting section, so long as being able to detect a parameter corresponding to the combustion cycles of the internal combustion engine, for example, the internal combustion engine-side detecting section may be a pressure sensor that detect a change in cylinder internal pressure or a sensor that detects the crank angle of the crank shaft.

(2) The embodiments measured the flow velocity based on a phase difference of waveform data generated based on the outputs of the measurement cells; however, it is not limited thereto, and the flow velocity may be measured directly using an analog signal output from the measurement cells. In this case, since the responsiveness of detection is improved, even in a case in which the engine revolution speed is higher than in the embodiments and the flow velocity of the exhaust gas is higher, the flow velocity can be measured in detail.

(3) The second embodiment is provided with two measurement cells; however, the number of measurement cells is not limited thereto, and may be three or more.

(4) In the third embodiment, helium gas was supplied as marker gas to the air; however, the gas to be supplied is not limited thereto, and may be another gas. In addition, the fluid functioning as a marker may be that which is contained in the fluid of the measurement target or that which is not contained therein.

(5) Although each embodiment calculated the flow velocity or flow rate of a gas such as air, the fluid is not limited thereto, and may be a liquid.

## Claims

1.   A fluid measurement device, comprising:

a generator-side detecting section that detects a parameter indicating an operating state of a fluid generator and changing in a corresponding way relative to a generation state of a fluid;

a pipe-side detecting section that is provided in a pipe in which a fluid containing the fluid generated by the fluid generator passes through, and detects a parameter relating to the fluid passing through the pipe and changing in a corresponding way relative to the operating state of the fluid generator; and

a calculating section that calculates a flow velocity of the fluid based on a time shift between a change in the parameter detected by the generator-side detecting section and a change in the parameter detected by the pipe-side detecting section, and a distance along the pipe between a detection position of the parameter relating to the fluid generator and the pipe-side detecting section.

2.   A fluid measurement device according to claim 1,

wherein the calculating section calculates a flow rate of the fluid based on the flow velocity of the fluid and a cross-sectional area of the pipe.

3. A fluid measurement device according to claim 1 or 2,
   wherein at least one of a temperature of the fluid, a concentration of a substance contained in the fluid, and an intensity of light absorbed, scattered, and irradiated by the substance is included in a parameter relating to the fluid.

4. A fluid measurement device according to any one of claims 1 to 3,
   wherein the fluid generator is an internal combustion engine that generates exhaust gas as a fluid, and
   wherein at least one of an open-close degree of an intake valve included in the internal combustion engine, an open-close degree of an exhaust valve, a pressure inside a combustion chamber included in the internal combustion engine, and a crank angle of a crank shaft included in the internal combustion engine is included in the parameter relating to the fluid.

5. A fluid measurement device according to any one of claims 1 to 4,
   wherein the pipe-side detecting section includes an irradiation portion that irradiates laser light into the fluid and a light-receiving portion that receives the laser light having transmitted or scattered through the fluid, and detects a parameter relating to the fluid based on an intensity ratio of irradiated light irradiated by the irradiation portion and transmitted light received by the light-receiving portion.

6. A fluid measurement device according to any one of claims 1 to 5,
   wherein a plurality of the pipe-side detecting sections is provided along the pipe, and
   wherein the calculating section selectively uses any output from among the plurality of the pipe-side detecting sections according to the flow velocity of the fluid.

7. A fluid measurement device according to any one of claims 1 to 6,
   wherein the calculating section evaluates a time shift between a change in a parameter detected by the generator-side detecting section and a change in a parameter detected by the pipe-side detecting section by comparing a waveform signal based on the change in the parameter detected by the pipe-side detecting section with a waveform signal based on the change in the parameter detected by the generator-side detecting section.

8. A fluid measurement device according to any one of claims 1 to 7,
   wherein the calculating section evaluates the time shift between the change in the parameter detected by the generator-side detecting section and the change in the parameter detected by the pipe-side detecting section by calculating a cross-correlation of the change in the parameter detected by the generator-side detecting section and the change in the parameter detected by the pipe-side detecting section.

9. A fluid measurement device according to any one of claims 1 to 8,
   wherein the fluid generator is an internal combustion engine that generates exhaust gas as a fluid, and
   wherein the calculating section estimates a revolution speed of the internal combustion engine based on a result of signal analysis on a change in a parameter relating to the exhaust gas obtained from an output signal of the pipe-side detecting section.

10. A fluid measurement device according to any one of claims 1 to 9,
    wherein the fluid generator is a fluid supply device that supplies, to upstream of the pipe-side detecting section into a first fluid passing through the pipe, a second fluid to cause a concentration of a substance contained in the first fluid to fluctuate, and
    wherein the pipe-side detecting section detects a change in a parameter relating to the first fluid or the second fluid.

11. A fluid measurement method, comprising:

    a generator-side detection step of detecting a parameter indicating an operating state of a fluid generator and changing in a corresponding way relative to a generator state of a fluid;
    a pipe-side detection step of detecting, in a pipe in which a fluid containing the fluid generated by the fluid generator passes through, a parameter relating to the fluid passing through the pipe and changing in a corresponding way relative to the operating state of the fluid generator; and
    a calculating step of calculating a flow velocity of the fluid based on a time shift between a change in the parameter detected in the generator-side detection step and a change in the parameter detected in the pipe-side detection step, and a distance along the pipe between a detection position of the parameter relating to the fluid generator and the pipe-side detecting section.

FIG. 1

## FIG. 2

40

45

44

42

ELECTRICAL SIGNAL CABLE
(FOR RECEIVED-LIGHT
SIGNAL TRANSMISSION)

PURGE GAS

MEASUREMENT TARGET (GAS, ETC.)

LASER FOR MEASUREMENT

23

PURGE GAS

41

43

OPTICAL FIBER
(LASER TRANSMISSION
FOR MEASUREMENT)

## FIG. 3A

4-SECOND MEASUREMENT RESULTS

## FIG. 3B

1-SECOND MEASUREMENT RESULTS

· Eg REVOLUTION SPEED : 2400 rpm →
  COMBUSTION PERIOD : 20 Hz (SINGLE CYLINDER 4-CYCLE)
· TH APERTURE : 100 %
· TORQUE : 10.1 Nm

## FIG. 4A
4-SECOND MEASUREMENT RESULTS

## FIG. 4B
0.6-SECOND MEASUREMENT RESULTS

- Eg REVOLUTION SPEED : 3600 rpm →
  COMBUSTION PERIOD : 30 Hz (SINGLE CYLINDER 4-CYCLE)
- TH APERTURE    : 100 %
- TORQUE      : 8.8 Nm

EP 2 249 129 A1

## FIG. 5A

EXAMPLE OF REFERENCE SIGNAL AND TEMPERATURE MEASUREMENT
SIGNAL FROM DETECTOR     2400r/min

Legend:
— EXHAUST VALVE APERTURE SIGNAL[%]
···· TEMPERATURE [°C]

LAG TIME
ΔT

## FIG. 5B

EXAMPLE OF REFERENCE SIGNAL AND TEMPERATURE MEASUREMENT
SIGNAL FROM DETECTOR     3600r/min

Legend:
— EXHAUST VALVE APERTURE SIGNAL[%]
···· TEMPERATURE [°C]

LAG TIME
ΔT

# FIG. 6A

FREQUENCY ANALYSIS RESULTS OF GAS TEMPERATURE FLUCTUATION
(COMPARISON RESULTS WITH Eg REVOLUTION SPEED (COMBUSTION PERIOD))

# FIG. 6B

FREQUENCY ANALYSIS RESULTS OF H2O CONCENTRATION FLUCTUATION
(COMPARISON RESULTS WITH Eg REVOLUTION SPEED (COMBUSTION PERIOD))

## FIG. 7A

FREQUENCY ANALYSIS RESULTS OF CO2 CONCENTRATION FLUCTUATION
(COMPARISON WITH Eg REVOLUTION SPEED (COMBUSTION PERIOD))

## FIG. 7B

FREQUENCY ANALYSIS RESULTS OF CO CONCENTRATION FLUCTUATION
(COMPARISON WITH Eg REVOLUTION SPEED (COMBUSTION PERIOD))

18

# FIG. 8

FREQUENCY ANALYSIS RESULTS OF CH4 CONCENTRATION FLUCTUATION
(COMPARISON WITH Eg REVOLUTION SPEED (COMBUSTION PERIOD))

## FIG. 9A

FREQUENCY ANALYSIS RESULTS OF GAS TEMPERATURE FLUCTUATION
(COMPARISON RESULTS WITH Eg REVOLUTION SPEED (COMBUSTION PERIOD))

## FIG. 9B

FREQUENCY ANALYSIS RESULTS OF H2O CONCENTRATION FLUCTUATION
(COMPARISON RESULTS WITH Eg REVOLUTION SPEED (COMBUSTION PERIOD))

## FIG. 10A

FREQUENCY ANALYSIS RESULTS OF CO2 CONCENTRATION FLUCTUATION
(COMPARISON WITH Eg REVOLUTION SPEED (COMBUSTION PERIOD))

## FIG. 10B

FREQUENCY ANALYSIS RESULTS OF CO CONCENTRATION FLUCTUATION
(COMPARISON WITH Eg REVOLUTION SPEED (COMBUSTION PERIOD))

# FIG. 11

FREQUENCY ANALYSIS RESULTS OF CH4 CONCENTRATION FLUCTUATION
(COMPARISON WITH EG REVOLUTION SPEED (COMBUSTION PERIOD))

FIG. 12

GAS TEMPERATURE
GAS CONCENTRATION
ENGINE REVOLUTION SPEED
FLOW VELOCITY
FLOW RATE

# FIG. 13

## INTERNATIONAL SEARCH REPORT

International application No.

PCT/JP2008/071939

| A. CLASSIFICATION OF SUBJECT MATTER |
|---|
| G01F1/712(2006.01)i |

According to International Patent Classification (IPC) or to both national classification and IPC

| B. FIELDS SEARCHED |
|---|

Minimum documentation searched (classification system followed by classification symbols)
G01F1/712

Documentation searched other than minimum documentation to the extent that such documents are included in the fields searched

| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y<br>A | JP 60-66117 A (Fuji Electric Co., Ltd.),<br>16 April, 1985 (16.04.85),<br>Claim 1; page 3, lower left column, line 1 to<br>lower right column, line 5<br>(Family: none) | 1,10,11<br>2,3,5-8<br>4,9 |
| Y<br>A | JP 2007-333655 A (Ono Sokki Co., Ltd.),<br>27 December, 2007 (27.12.07),<br>Par. Nos. [0016] to [0022]; Fig. 1<br>(Family: none) | 2,3,5-8<br>4,9 |
| A | JP 59-48621 A (Horiba, Ltd.),<br>19 March, 1984 (19.03.84),<br>Full text; all drawings<br>(Family: none) | 1-11 |

☒ Further documents are listed in the continuation of Box C.    ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>09 January, 2009 (09.01.09) | Date of mailing of the international search report<br>20 January, 2009 (20.01.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/071939

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-170357 A (Toyota Motor Corp.), 17 June, 2004 (17.06.04), Full text; all drawings (Family: none) | 1-11 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3943853 B